# EUROPEAN PATENT APPLICATION

(11) **EP 1 914 514 A1**
(43) Date of publication of application: **23.04.2008**
(21) Application number: 06021883.1
(22) Date of filing: 18.10.2006
(51) Int. Cl.: G01C 21/34, G08G 1/0969

(54) **Method of operating a navigation system in a vehicle and vehicle navigation system**

(71) Applicant: Harman Becker Automotive Systems GmbH, 76307 Karlsbad (DE)
(72) Inventor: Seifried, Kai, 77815 Bühl (DE)
(74) Representative: Bertsch, Florian Oliver

(57) **Abstract**

The present invention relates to a method operating a navigation system and a corresponding navigation system comprising:
- a positioning device (22) for determining the vehicle position with respect to a digital map representation and for generating a corresponding position data signal,
- a traffic monitoring device (10) for receiving and analyzing traffic information data so as to detect a relevant event relating to a travel route, and generating a corresponding traffic monitoring data signal,
- processing means (20) for generating a navigation information on the basis of the position data signal and/or the traffic monitoring data signal, and
- an output device (24,26) for outputting the navigation information to a vehicle user. The processing means (20) are provided with a dedicated operating mode, in which a navigation information is output to the vehicle user only if a relevant event is detected by the traffic monitoring device (10).

## Description

The present invention relates to a method of operating a navigation system in a vehicle and to a corresponding vehicle navigation system.

In present vehicles, it is known to use navigation systems which provide a vehicle user, i.e. the driver, with navigation instructions and thereby facilitate orientation of the driver when traveling unknown routes. Generally, a navigation system comprises a positioning device, e.g. on the basis of the so-called global positioning system (GPS), for determining the vehicle position with respect to a digital map representation. Processing means are provided for generating a navigation information, e.g. said navigation instructions, on the basis of the vehicle position and a user-selected navigation route.

To improve the functionality of the navigation system, it is known to additionally use traffic information data when generating said navigation information. The traffic information data is for example available from a so-called Traffic Message Channel (TMC) which is a digital radio data service used for broadcasting information on traffic obstructions to suitable receiver devices. The traffic information may be used by the navigation system to avoid the traffic obstruction.

However, many travel routes are well-known to the driver. In such a case, the driver will keep the navigation system deactivated so as to avoid being disturbed or irritated by unnecessary navigation instructions. Therefore, the driver will not benefit from the traffic information data received in the navigation system and there is a risk that a traffic obstruction is encoutered on the travel route.

Accordingly, there exists a need to improve existing navigation systems in such a way that the driver can benefit from the functions of the navigation system even when traveling on a well-known route, without being disturbed or irritated by unnecessary navigation information. This need is met by the features of the independent claims. The dependent claims define preferred or advantageous embodiments of the invention.

According to a first aspect of the invention, a method of operating a navigation system in a vehicle is proposed. The method comprises receiving traffic information data in the navigation system, analyzing the traffic information data so as to detect a relevant event relating to a travel route on which the vehicle moves, and outputting a navigation information to a vehicle user only if a relevant event is detected. Preferably, the above-mentioned method steps are carried out within a dedicated operating mode of the navigation system. The traffic information data may, for example, be received via a TMC service or a comparable traffic data service. The navigation information output to the vehicle user may comprise a warning relating to the detected relevant event or may comprise navigation instructions relating to an alternative navigation route which is automatically determined by the navigation system. The travel route on which the vehicle moves may be automatically determined by the navigation system, e.g. using position data with respect to a digital map representation, or may be selected on the basis of at least one predefined route.

According to the proposed method, the vehicle user can benefit from the functions of the navigation system and the traffic information data received therein even when traveling on a well-known route. It is possible to have the navigation system operating silently in the background and providing its navigation information to the vehicle user only if an abnormal situation is detected on the basis of the traffic information data. Therefore, the dedicated operating mode may also be referred to as "silent operating mode". Generally, such abnormal situation involves some type of traffic obstruction, and the traffic information data received in the navigation system comprises information on the location of the traffic obstruction and/or time-related information on the traffic obstruction, i.e. time of beginning, expected duration and the like.

Preferably, the dedicated operating mode is activated and deactivated by the vehicle user. In this way, the vehicle user can decide whether he wants to receive navigation instructions or not.

According to an embodiment, the method is carried out on the basis of one or a plurality of predefined routes, which are known to the vehicle user and therefore suitable for using the above-mentioned silent operating mode. If a plurality of predefined routes is provided, the vehicle user may select between the predefined routes. Alternatively or in addition, it is possible that the navigation system automatically evaluates position data of the vehicle with respect to a digital map representation so as to detect if the vehicle travels on a predefined route and to select the recognized predefined route as the travel route with respect to which the traffic information data are analyzed. In this way, actions required from the vehicle user can be kept at a minimum.

Preferably, the predefined travel routes will be frequently used travel routes, such as those used by a commuter when traveling between homeplace and workplace. According an embodiment, the method may also comprise automatically recognizing frequently used travel routes and storing the recognized frequently used travel routes as predefined routes to be used in the silent operating mode. In this way, it is possible that the navigation system "learns" the predefined travel routes and the vehicle user is not unduly bothered with storing the predefined routes into the navigation system.

According to a further aspect, the invention provides a vehicle navigation system which is configured to operate according to the method as described above. In particular, the navigation system comprises a positioning device, such as a GPS device, for determining the vehicle position with respect to a digital map representation, processing means for generating a navigation information, an output device for outputting the navigation information to a vehicle user, and a traffic monitoring device for receiving traffic information data and analyzing the traffic information data so as to detect a relevant event relating to a travel route on which the vehicle moves. According to the invention, the processing means are provided with a dedicated operating mode in which the navigation information is output to the vehicle user only if a relevant event is detected by the traffic monitoring device. That is to say, the vehicle navigation system provides a silent operating mode as described above.

Preferably, the navigation system also comprises an input device for activating or deactivating the dedicated operating mode, for selecting between a plurality of predefined routes to be used when analyzing the traffic information data or for storing predefined routes into the navigation system. The input device may comprise suitably designed switches, a keyboard or a touchscreen. When using a touchscreen, the input device can be combined with the output device. For storing one or a plurality of predefined routes to be used when analyzing the traffic information data, suitably designed storage means may be provided. In particular, the storage means may be of a rewritable non-volatile type. In this way, the predefined routes may easily be changed by the vehicle user, and even in the case of a power outage the stored information is not lost.

For receiving the traffic information data, the navigation system may comprise a receiver for a TMC service or the like. Alternatively or in addition, the navigation system may be provided with an interface so as to receive TMC data from an external TMC receiver, such as a car radio or vehicle entertainment system.

The invention also relates to a vehicle which comprises a navigation system as described above. If the vehicle comprises a traffic information data receiver, such as in a car radio or entertainment system, the navigation system is preferably coupled to the car radio or entertainment system so as to receive the traffic information data.

In the following, the invention will be further described with reference to the preferred embodiments and to the accompanying drawings.

In the drawings
Fig. 1 shows a schematic view of a vehicle navigation system which is configured to process traffic information data according to an embodiment of the invention,
Fig. 2 is a schematic representation of a map including a predefined route and an alternative navigation route as provided in a method according to an embodiment of the invention, and
Fig. 3 shows a flowchart illustrating a method of operating a navigation system in a vehicle according to an embodiment of the invention.

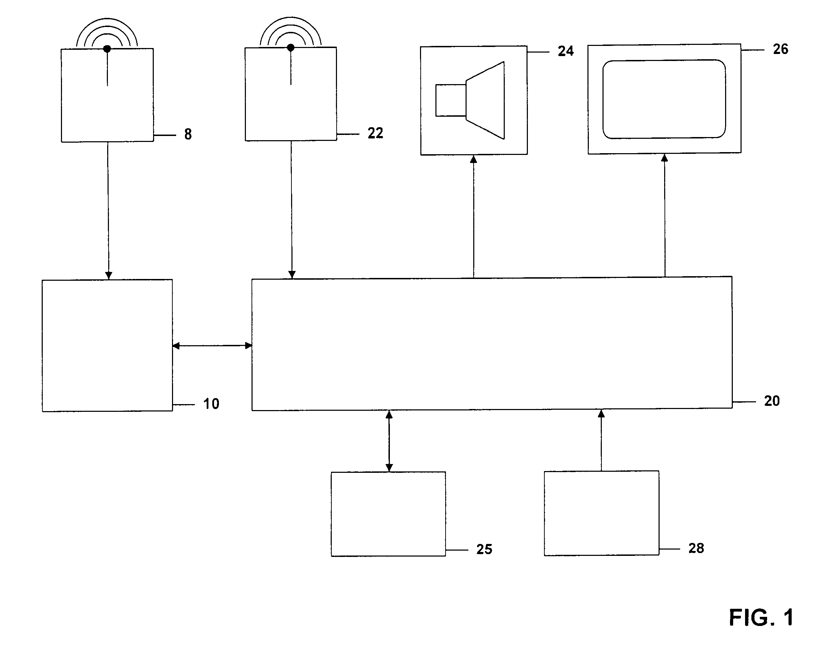

Fig. 1 schematically illustrates a vehicle navigation system according to an embodiment of the invention. The navigation system comprises a satellite-based positioning device 22 which allows for determining the position of a vehicle in which the navigation system is installed with respect to a digital map representation. In particular, the positioning device 22 may comprise a GPS receiver or comparable satellite receiver for receiving navigation signals from navigation satellites. The digital map representation is stored in a suitable storage device, e.g. a hard disk device, a CD-ROM device, a DVD device, a ROM memory device, or the like. In Fig. 1, a storage device 25 is schematically illustrated. It may actually comprise different types of storage media of the above-mentioned type. In addition, a rewritable non-volatile memory, such as a flash memory, is provided so that it is possible to store processing information in a flexible way and to maintain the stored information even in the case of a power outage.

The navigation system generates navigation information on the basis of position data obtained by means of the positioning device 22. The navigation information may in particular comprise navigation instructions, i.e. indications which action should be taken in order to navigate the vehicle on a preselected navigation route (e.g. "turn left", "turn right", or "follow the course of the road"). The navigation information may also comprise warnings relating to the navigation route, e.g. with respect to abnormal road conditions, speed limits or the like. For presenting the navigation information to the vehicle user, the navigation system comprises output devices in the form of a loudspeaker device 24 and in the form of an optical display device 26. The loudspeaker device 24 may be a dedicated component of the navigation system. The loudspeaker device may also be a component of a vehicle entertainment system, e.g. a car radio. In the latter case, the navigation system comprises an interface which allows for transmitting the corresponding output signals to the vehicle entertainment signal. This may be accomplished via a digital data bus of the vehicle. Preferably, the optical display device 26 is a full graphic display, e.g. a liquid-crystal display, a thin-film transistor display or a cathode-ray tube display. It is also conceivable to use a projection display, such as a so-called head-up display in which optical information is projected onto a windscreen of the vehicle. The optical display device may also be combined with an input device, i.e. the optical display device 26 may be configured as a touchscreen device. The optical display device 26 may be a dedicated component of the navigation system or may be commonly used together with other vehicle systems, e.g. a multi-media system.

For generating said navigation information, the navigation system comprises a processing unit 20. The processing unit 20 is coupled to the positioning device 22 for receiving a position data signal, is coupled to the loudspeaker device 24 so as to provide an acoustical output data signal, and is coupled to the optical display device 26 so as to provide an optical output data signal. Further, the processing unit 20 is coupled to the storage device 25 so as to receive digital map data and to receive and transmit a processing data signal. The processing unit 20 evaluates position data received via the position data signal and digital map data received from the storage device 25 so as to generate navigation information to be output to the vehicle user, i.e. a corresponding acoustical output signal and/or optical output signal.

To allow control of the processing unit 20 by the vehicle user, the processing unit 20 is further coupled to an input device 28. The input device 28 may comprise suitably designed switches and/ or a keyboard. By way of example, the input device 28 may be used to activate or deactivate the navigation system, to select the navigation route, to select between different display modes (e.g. only acoustic output of navigation information, only optical output of navigation information or both acoustical and optical output of navigation information), or the like.

As illustrated in Fig. 1, the navigation system further comprises a traffic monitoring device 10. The traffic monitoring device 10 is coupled to the processing unit 20 so as to provide a traffic monitoring data signal. For generating the traffic monitoring data signal, the traffic monitoring device 10 is coupled to a traffic information data receiver 8, which is configured to receive a broadcast traffic information data signal, such as that of a TMC service. The traffic information data signal contains traffic information which is evaluated with respect to a travel route on which the vehicle moves. In normal operations of a navigation system, this travel route will be the navigation route selected by the vehicle user. The traffic information data receiver 8 may be a dedicated component of the navigation system or may be a component of another vehicle system, e.g. a vehicle entertainment system or a car radio. In the latter case, the navigation system is provided with a suitable interface so as to receive the traffic information data signal from the traffic information data receiver 8. Again, this may be accomplished via a digital data bus of the vehicle.

The traffic monitoring device 10 evaluates the traffic information data received via the traffic information data signal so as to detect a relevant event relating to the travel route on which the vehicle moves. For this purpose, the traffic monitoring device 10 also receives a travel route information data signal from the processing unit 20. As mentioned above, in normal operation the travel route will be the navigation route selected by the vehicle user. A relevant event may be any type of traffic obstruction occurring in the travel route within a time interval in which the vehicle is expected to pass the location of the traffic obstruction. For example, traffic obstructions may be caused by accidents, road works or the like. If a relevant event relating to the travel route is identified by the traffic monitoring device 10, a corresponding traffic monitoring data signal is generated and provided to the processing unit 20. The processing unit 20 will then generate the navigation information taking into account the traffic monitoring information received via the traffic monitoring data signal. For example, the loudspeaker device 24 and/or the optical display device 26 may be controlled to provide a warning to the vehicle user, and/or an alternative navigation route may be computed which allows to avoid the traffic obstruction.

In the following, the evaluation of the traffic information data by means of the traffic monitoring device 10 will be further explained. For this purpose, it will be referred to traffic information data as received via the TMC service.

The TMC service is a digital radio service transmitted together with a radio program. The TMC data signal is continuously broadcast and contains information on traffic obstructions in a specific area. For each traffic obstruction, a separate message is transmitted. The message contains an event code and a location code. The message may also contain a time-limitation code. Normally, if a traffic obstruction is no longer present, the message corresponding to this traffic obstruction will be cancelled by a further message. If the receiver is not able to receive the canceling message (e.g. because the receiver has moved out of the receiving area), the message indicating the traffic obstruction is cancelled if an expiration time indicated by the time-limitation code is reached.

The event code defines the type of traffic obstruction. Generally, there is a standard which provides a list comprising a plurality of different events and corresponding event codes. By means of the list, the receiver can translate the event code into a corresponding event information.

The location code refers to a location table which is typically provided on a national level. That is to say, in each country there is a specific location code corresponding to a specific road section.

By correlating the information contained in the event code, in the location code, and in the time-limitation code with the travel route information data received from the processing unit 20, the traffic monitoring device 10 can automatically decide whether a traffic obstruction indicated by a received message is relevant or not and generate a corresponding traffic monitoring data signal.

The above explanations mainly refer to a normal operating mode of the navigation system, in which the navigation system generates navigation information so as to allow the vehicle user to navigate on a selected navigation route. However, when traveling on a well-known route, which is regularly the case, for example if a commuter travels between homeplace and workplace, such navigation information is not necessary. It has turned out that in such cases the navigation information is found to be irritating or disturbing. Therefore, the vehicle user will tend to deactivate the navigation system and will therefore no longer be able to benefit from its functions.

In view of the above, the navigation system of Fig. 1 comprises a dedicated operating mode to be used when traveling on a well-known route or if the vehicle user considers navigation information to be undesirable for some other reason. Generally, the operating mode involves that the navigation system operates in a similar way as described above, however without outputting the navigation information unless a relevant event is detected by the traffic monitoring device 10. As in the operating mode the output of navigation information is suppressed, the operating mode is referred to as "silent" operating mode. In the described example, the silent operating mode is activated by the vehicle user via the input device 28. In the following, differences of the silent operating mode as compared to the normal operation will be further explained.

As explained above, in normal operation a navigation route is selected by the vehicle user. This is typically accomplished by defining at least a destination point so that the navigation system may compute a suitable navigation route. Additional parameters may be defined, such as desired travel speed, desired type of road, or the like. The traffic monitoring device 10 evaluates the traffic information data with respect to the selected navigation route.

As compared to that, in the silent operating mode, the travel route with respect to which the traffic monitoring device 10 evaluates the traffic information data is constituted by a predefined route, e.g. a frequently traveled route. Accordingly, after selecting the silent operating mode, the processing unit 20 provides the travel route information data signal according to the predefined route. The predefined route is stored in the storage device 25. It is possible to store a plurality of predefined routes, which can then be selected by the vehicle user via the input device 28. Preferably, in case that a plurality of predefined routes is stored in the storage device 25, the processing unit 20 is configured to automatically select between the predefined routes depending on the position data received from the positioning device 22. In this case, an action of the vehicle user is only required if the position data do not allow for distinguishing between two predefined routes, e.g. if the vehicle is located on a road section forming part of more than one predefined route.

In the silent operating mode, the traffic monitoring device 10 continuously evaluates the traffic information data so as to detect if there is a relevant event relating to the selected predefined route. The processing unit 20 operates silently in the background without outputting navigation information to the vehicle user. However, if a relevant event is detected by the traffic monitoring device 10, a corresponding traffic monitoring data signal is provided to the processing unit 20, and a navigation information is output to the vehicle user.

The type of navigation information may depend on the type of event detected by the traffic monitoring device 10. In the first place, a warning may be output to the vehicle user. In addition, an alternative navigation route may be computed by the navigation system. In such a case, it is preferable that the vehicle user is informed that an alternative navigation route is available and that the user is allowed to select whether or not the alternative navigation route should be used for providing navigation information. If the vehicle user selects the alternative navigation route for further navigation, this substantially corresponds to leaving the silent operating mode of the navigation system and returning to normal operation. It is also possible that the navigation system offers to change to another predefined route, and that the navigation system remains in the silent operating mode.

In the following, a preferred way of storing a predefined route in the navigation system will be described. In many cases, the predefined route will correspond to a route which is frequently traveled by the vehicle user. Therefore, it is possible to store the predefined route in the navigation system by utilizing a learning function. For this purpose, the processing unit 20 continuously evaluates the position data provided by the positioning device 22 so as to identify frequently traveled routes. This may be accomplished by storing each route which was traveled by the vehicle in the memory device 25 and by comparing the presently traveled route with the previously stored routes. If the frequency of occurrence exceeds a threshold value, the presently traveled route is identified as frequently traveled route. In this case, a message is provided to the vehicle user and the vehicle user may store the identified route as predefined route to be used in the silent operating mode. Another possibility of storing the predefined routes is by manually activating a learning mode of the navigation system. That is to say the vehicle user activates the learning mode, thereby indicating that a subsequently traveled route is to be stored as predefined route. After traveling the route to be stored, the learning mode is deactivated, and the traveled route is stored as predefined route in the storage device 25. Of course, it is also possible to manually store predefined routes, e.g. by using the input device 28.

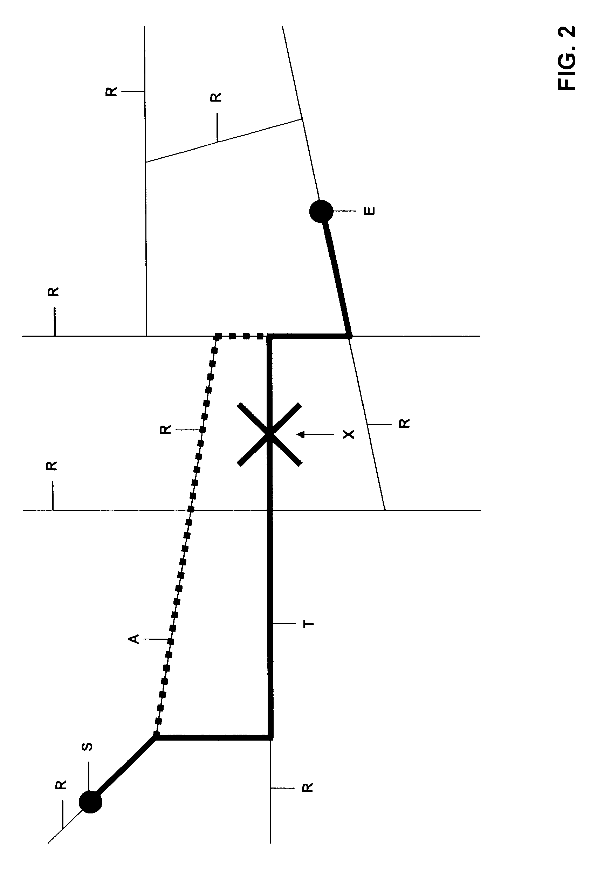

In the following, the silent operating mode of the navigation system will be further illustrated by referring to the schematic map representation of Fig. 2.

In Fig. 2, an example of a map representation is shown. The map representation comprises a plurality of roads R. In the map representation, a predefined route T to be used in the silent operating mode of the navigation system is indicated by a thick line. The predefined route T comprises a starting point S and an end point E. When traveling on the predefined route T, it is not necessary that the navigation system provides navigation information to the vehicle user, as the predefined route T is well-known to the vehicle user. When starting at the starting point S, the vehicle user therefore activates the silent operating mode of the navigation system. If no relevant event is detected by the traffic monitoring device 10, the navigation system suppresses all outputs of navigation information to the vehicle user throughout the predefined route T.

However, if a relevant event is detected by the traffic monitoring device 10, a navigation information is output to the vehicle user. In the example of Fig. 2, a traffic obstruction is illustrated by a cross X on the predefined route T. As the traffic obstruction is located on the predefined route, it is identified as a relevant event and the traffic monitoring device 10 generates a corresponding traffic monitoring data signal which is supplied to the processing unit 20. The processing unit 20 responds by generating a corresponding navigation information. In the illustrated example, the navigation information in the first place comprises a warning that there is a traffic obstruction. Preferably, the warning also includes information on the type and location of the traffic obstruction. Moreover, the navigation information generated by the navigation system also includes information on an alternative navigation route A computed by the processing unit 20. Accordingly, it is possible for the vehicle user to decide which action should be taken. On the one hand, the vehicle user may decide to further follow the predefined route T, for example if the vehicle user recognizes that the traffic obstruction is no serious problem. On the other hand, the vehicle user may decide to use the alternative navigation route A and to return to normal operation of the navigation system.

In Fig. 2, a common situation for an alternative navigation route is illustrated, in which the alternative navigation route A bypasses an intermediate section of the predefined travel route T. That is to say, the alternative navigation route A returns to the predefined route T before the end point E is reached. In such cases, it is preferable that the navigation system automatically returns to its silent operating mode after the vehicle has returned to the predefined route T. Returning of the vehicle to the predefined route can be detected by means of the position data obtained by the positioning device 22.

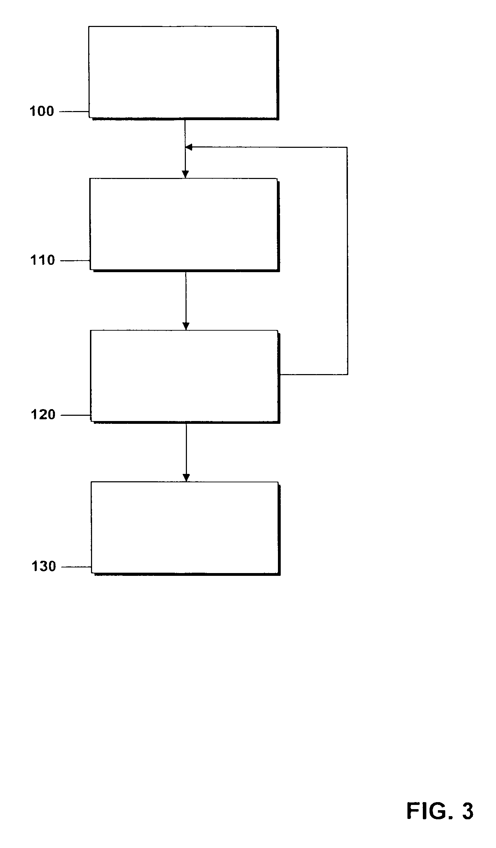

Fig. 3 shows a flowchart illustrating the silent operating mode of the navigation device.

In step 100, the silent operating mode is activated by the vehicle user. This is accomplished using the input device 28.

In step 110, traffic information data is received in the navigation system. This is accomplished by means of the traffic information signal receiver 8 and the traffic monitoring device 10.

In step 120, the traffic information data is evaluated so as to detect if there is a relevant event relating to the travel route on which the vehicle moves. In general, any traffic obstruction which has to be passed by the vehicle when following the present travel route will be considered as a relevant event. If no such event is detected, the navigation system remains in its silent operating mode and the method continues by returning to step 110, without outputting a navigation information to the vehicle user.

If in step 120 a relevant event is detected, the traffic monitoring device generates a corresponding traffic monitoring data signal which is supplied to the processing unit 20. The method then continues with step 130.

In step 130, a navigation information is provided to the vehicle user. The navigation information may be a warning relating to the detected traffic obstruction or may contain information on an alternative navigation route. In step 130, the vehicle user may decide whether to maintain the silent operating mode or to leave the silent operating and to use navigation instructions provided by the navigation system to navigate according to the alternative navigation route.

As an alternative to the above-mentioned approach of using a predefined route for evaluating the traffic information data in the silent operating mode, it is also possible to use an expected travel route. The expected travel route may be determined by the processing means 20 on the basis of the position data received from the positioning device 22. Preferably, determining the expected course of the road is accomplished taking into account further information, e.g. on the type of road on which the vehicle moves. Such information is typically available from the digital map representation used for obtaining the position data. It may also be advantageous to take into account information on the travel route the vehicle has followed before the time of evaluation.

Using this information, the expected travel route can be computed. For the expected travel route, there exists a certain probability that it will be followed by the vehicle. Traffic information relating to the expected travel route is therefore valuable to the vehicle user and the expected travel route is thus suitable to be used in the silent operating mode of the navigation system.

To give an example of determining the expected travel route, a situation is considered in which the vehicle moves on a motorway or other main traffic route. Further, it is assumed that the vehicle has just entered the main traffic route from a smaller road. In such a situation, it is highly probable that the vehicle will remain on the main traffic route for certain time. Therefore, the further course of the main traffic route can be determined as the expected travel route.

It is also conceivable to operate with multiple expected travel routes, e.g. if there is a branching in the further course of the road on which the vehicle moves. In such a case, both possibilities for the further travel route may have comparable probabilities to be chosen by the driver and it is advantageous to take into account both expected travel routes when evaluating the traffic information data.

Of course, it is possible to combine the concept of using predefined routes with the concept of using expected travel routes. For example, predefined routes may be used as a basis for identifying expected travel routes.

To summarize, embodiments of a vehicle navigation system and an operating method therefore have been described, which allow to benefit from the functions of the navigation system even when traveling on a well-known route. It is to be understood that in the above-described embodiments various modifications can be made. For example, although the traffic monitoring device 10 and the processing unit 20 have been illustrated as separate blocks in the diagram of Fig. 1, the corresponding functions may be implemented by suitable software running on a single microprocessor. Further, the above-described concepts are not limited to a specific type of positioning device or traffic information data receiver. The navigation system could be integrated in a multimedia system of the vehicle, thereby minimizing hardware outlay. In this case, the processing unit 20, the output device 24, 26, and the input device 28 could be commonly used by several vehicle systems.

## Claims

1. A method of operating a navigation system in a vehicle, comprising
- receiving traffic information data in the navigation system,
- determining the travel route on which the vehicle is moving,
- analyzing the traffic information data so as to detect a relevant event relating to the travel route on which the vehicle moves, and
- outputting a navigation information to a vehicle user only if a relevant event is detected.

2. The method according to claim 1,
**characterized by** further comprising
- if a relevant event is detected, determining an alternative navigation route,
wherein the navigation information which is output to the vehicle user includes navigation instructions relating to the alternative navigation route.

3. The method according to claims 1 or 2,
**characterized in that**
the navigation information which is output to the vehicle user comprises a warning relating to the detected relevant event.

4. The method according to any one of the preceding claims,
**characterized in that**
the method is carried out within a dedicated operating mode of the navigation system.

5. The method according to claim 4,
**characterized in that**
the dedicated operating mode is to be activated by the vehicle user.

6. The method according to any one of the preceding claims,
**characterized by** comprising:
- selecting a predefined travel route to be used as the travel route in said analyzing of the traffic information data.

7. The method according to any one of the preceding claims,
**characterized by** comprising:
- determining the vehicle position with respect to a digital map representation so as to determine position data of the vehicle,
- evaluating the position data so as to detect if the vehicle moves on a predefined route, and
- selecting the recognized predefined route as the travel route to be used in said analyzing of the traffic information data.

8. The method according to claims 6 or 7,
**characterized in that**
the predefined route is a frequently used travel route.

9. The method according to any one of claims 6-8,
**characterized by** comprising:
- determining the vehicle position with respect to a digital map representation so as to determine position data of the vehicle,
- evaluating the position data so as to automatically identify a frequently used travel route, and
- storing the identified frequently used travel used as predefined route.

10. The method according to any one of claims 1-5,
**characterized by** comprising:
- determining the vehicle position with respect to a digital map representation so as to determine position data of the vehicle,
- evaluating the position data so as to determine an expected travel route, and
- selecting the expected travel route as the travel route to be used in said analyzing of the traffic information data.

11. The method according to claim 10,
**characterized in that**
the expected travel route is determined taking into account information on the type of the road on which the vehicle moves.

12. The method according to claims 10 or 11,
**characterized in that**
the expected travel route is determined taking into account information on the travel route the vehicle has followed before the time of evaluation.

13. A vehicle navigation system, comprising:
- a positioning device (22) for determining the vehicle position with respect to a digital map representation and for generating a corresponding position data signal,
- a traffic monitoring device (10) for receiving traffic information data and analyzing the traffic information data so as to detect a relevant event relating to a travel route on which the vehicle moves, wherein the traffic monitoring device (10) generates a corresponding traffic monitoring signal,
- processing means (20) for generating a navigation information on the basis of the position data signal and/or the traffic monitoring data signal,
an output device (24, 26) for outputting the navigation information to a vehicle user,
wherein the processing means (20) are provided with a dedicated operating mode in which the navigation information is output to the vehicle user only if a relevant event is detected by the traffic monitoring device (10).

14. The vehicle navigation system according to claim 13,
**characterized in that**
the output device (24, 26) comprises an optical display device and/or a loudspeaker device.

15. The vehicle navigation system according to claims 13 or 14,
**characterized by** comprising:
- an input device (28) for activating the dedicated operating mode.

16. The navigation system according to any one of claims 13-15,
**characterized by** comprising:
- storage means (25) for storing at least one predefined route, wherein the traffic monitoring device (10) is configured to use the predefined route as the travel route in said analyzing of the traffic information data.

17. The navigation system according to claim 16,
**characterized in that**
the storage means (25) is configured to store a plurality of predefined routes, wherein the navigation system comprises an input device (28) for selecting one of the predefined routes as the travel route to be used by the traffic monitoring device (10) in said analyzing of the traffic information data.

18. The navigation system according to claims 16 or 17,
**characterized in that**
the processing means (20) are configured to evaluate position data received from the positioning device (22) so as to automatically select the predefined route as the travel route to be used by the traffic monitoring device (10) in said analyzing of the traffic information data.

19. The navigation system according to any one of claims 16-18,
**characterized in that**
the processing means (20) are configured to evaluate position data received from the positioning device (22) so as to identify a frequently used travel route and to store an identified frequently used travel use as predefined route in the storage means (25).

20. The navigation system according to any one of claims 13-15,
**characterized in that**
the processing means (20) are configured to evaluate position data received from the positioning device (22) so as to determine an expected travel route and to select the expected travel route as the travel route to be used by the traffic monitoring device (10) in said analyzing of the traffic information data.

21. A vehicle, comprising:
- a navigation system, and
- a traffic information data receiver (8) for providing a traffic information data signal to the navigation system,
**characterized in that**
the navigation system is configured according to any one of claims 13 to 20.

22. The vehicle according to claim 21,
**characterized in that**
the traffic information data receiver (8) is comprised in a vehicle entertainment system.

## Amended claims

### Amended claims in accordance with Rule 137(2) EPC.

**1.** A method of operating a navigation system in a vehicle, comprising
- receiving traffic information data in the navigation system,
- determining the vehicle position with respect to a digital map representation so as to determine position data of the vehicle,
- evaluating the position data so as to determine an expected travel route,
- analyzing the traffic information data so as to detect a relevant event relating to the expected travel route, and
- outputting a navigation information to a vehicle user only if a relevant event is detected,
**characterized in that**
the expected travel route is determined taking into account information on the type of the road on which the vehicle moves or information on the travel route the vehicle has followed before the time of evaluation.

**2.** The method according to claim 1,
**characterized by** further comprising
- if a relevant event is detected, determining an alternative navigation route,
wherein the navigation information which is output to the vehicle user includes navigation instructions relating to the alternative navigation route.

**3.** The method according to claims 1 or 2,
**characterized in that**
the navigation information which is output to the vehicle user comprises a warning relating to the detected relevant event.

**4.** The method according to any one of the preceding claims,
**characterized in that**
the method is carried out within a dedicated operating mode of the navigation system.

**5.** The method according to claim 4,
**characterized in that**
the dedicated operating mode is to be activated by the vehicle user.

**6.** The method according to any one of the preceding claims,
**characterized by** comprising:
- selecting a predefined travel route to be used as the expected travel route.

**7.** The method according to any one of the preceding claims,
**characterized by** comprising:
- evaluating the position data so as to detect if the vehicle moves on a predefined route, and
- selecting the recognized predefined route as the expected travel route.

**8.** The method according to claims 6 or 7,
**characterized in that**
the predefined route is a frequently used travel route.

**9.** The method according to any one of claims 6-8,
**characterized by** comprising:
- evaluating the position data so as to automatically identify a frequently used travel route, and
- storing the identified frequently used travel used as predefined route.

**10.** A vehicle navigation system, comprising:
- a positioning device (22) for determining the vehicle position with respect to a digital map representation and for generating a corresponding position data signal,
- a traffic monitoring device (10) for receiving traffic information data and analyzing the traffic information data so as to detect a relevant event relating to a travel route on which the vehicle moves, wherein the traffic monitoring device (10) generates a corresponding traffic monitoring signal,
- processing means (20) for generating a navigation information on the basis of the position data signal and/or the traffic monitoring data signal,
an output device (24, 26) for outputting the navigation information to a vehicle user,
wherein the processing means (20) are provided with a dedicated operating mode in which the navigation information is output to the vehicle user only if a relevant event is detected by the traffic monitoring device (10), and
wherein the processing means (20) are configured to evaluate position data received from the positioning device (22) so as to determine an expected travel route and to select the expected travel route as the travel route to be used by the traffic monitoring device (10) in said analyzing of the traffic information data,
**characterized in that**
the processing means (20) are configured to determine the expected travel route taking into account information on the type of road on which the vehicle moves or information on the travel route the vehicle has followed before the time of evaluation.

**11.** The vehicle navigation system according to claim 10,
**characterized in that**
the output device (24, 26) comprises an optical display device and/or a loudspeaker device.

**12.** The vehicle navigation system according to claims 10 or 11,
**characterized by** comprising:
- an input device (28) for activating the dedicated operating mode.

**13.** The navigation system according to any one of claims 10-12,
**characterized by** comprising:
- storage means (25) for storing at least one predefined route, wherein the traffic monitoring device (10) is configured to use the predefined route as the expected travel route.

**14.** The navigation system according to claim 13,
**characterized in that**
the processing means (20) are configured to evaluate the position data received from the positioning device (22) so as to automatically select the predefined route as the expected travel route.

**15.** The navigation system according to claims 13 or 14,
**characterized in that**
the processing means (20) are configured to evaluate position data received from the positioning device (22) so as to identify a frequently used travel route and to store an identified frequently used travel use as predefined route in the storage means (25).

**16.** A vehicle, comprising:
- a navigation system, and
- a traffic information data receiver (8) for providing a traffic information data signal to the navigation system,
**characterized in that**
the navigation system is configured according to any one of claims 10-15.

**17.** The vehicle according to claim 16,
**characterized in that**
the traffic information data receiver (8) is comprised in a vehicle entertainment system.
